(19) Europäisches Patentamt / European Patent Office / Office européen des brevets

(11) **EP 2 381 573 B1**

(12) **EUROPEAN PATENT SPECIFICATION**

(45) Date of publication and mention
of the grant of the patent:
**16.10.2019 Bulletin 2019/42**

(21) Application number: **09834364.3**

(22) Date of filing: **17.12.2009**

(51) Int Cl.:
*H02M 7/48* (2007.01)    *H02H 7/12* (2006.01)
*H02H 7/122* (2006.01)

(86) International application number:
**PCT/JP2009/006950**

(87) International publication number:
**WO 2010/073552 (01.07.2010 Gazette 2010/26)**

(54) **APPARATUS FOR PROTECTING POWER SUPPLY CIRCUIT OF THREE-PHASE INVERTER**

VORRICHTUNG ZUM SCHUTZ DER STROMVERSORGUNGSSCHALTUNG EINES
DREIPHASEN-UMRICHTERS

DISPOSITIF DE PROTECTION DE CIRCUIT D'ALIMENTATION ÉLECTRIQUE D'INVERSEUR
TRIPHASÉ

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **25.12.2008 JP 2008329545**

(43) Date of publication of application:
**26.10.2011 Bulletin 2011/43**

(73) Proprietors:
• **Hitachi Power Semiconductor Device, Ltd.
Hitachi-shi, Ibaraki (JP)**
• **Sanden Holdings Corporation
Gunma 372-8502 (JP)**

(72) Inventors:
• **MAEDA, Daisuke
Hitachi-shi
Ibaraki 317-8511 (JP)**
• **ITO, Yoshiki
Hitachi-shi
Ibaraki 319-1293 (JP)**
• **SHIRAHAMA, Hidefumi
Hitachi-shi
Ibaraki 317-8511 (JP)**
• **KOBAYASHI, Koji
Isesaki-shi
Gunma 372-8502 (JP)**
• **YOSHIDA, Hiroshi
Isesaki-shi
Gunma 372-8502 (JP)**
• **TAKADA, Kohei
Isesaki-shi
Gunma 372-8502 (JP)**

(74) Representative: **Strehl Schübel-Hopf & Partner
Maximilianstrasse 54
80538 München (DE)**

(56) References cited:
EP-A1- 1 811 645     DE-A1-102004 025 176
JP-A- 5 344 734     JP-A- 2003 189 631
JP-A- 2004 254 392     JP-A- 2006 109 583
US-A- 4 620 296     US-A- 4 678 980

**Description**

FIELD OF THE INVENTION

The present invention relates to a power supply circuit protecting apparatus including a power supply circuit for converting an AC input voltage into a predetermined output voltage and a three-phase inverter circuit for receiving the output voltage as input and performing a predetermined operation to drive a motor for use in air conditioners, water heaters, etc.

BACKGROUND OF THE INVENTION

The following problem can be found in an apparatus including a power supply circuit for converting an AC input voltage into a predetermined output voltage and a three-phase inverter circuit for receiving the output voltage as input and performing a predetermined operation to drive a motor for use in air conditioners, water heaters, etc. Namely, excessive stress is applied to semiconductor switching devices, capacitors, reactors, and other circuit components when an anomaly such as an instantaneous power failure or an instantaneous voltage drop occurs in an AC input, or when power is restored after such an anomaly. This may cause problems such as damage to components.

Conventionally, a power supply circuit has been protected by detecting anomalies, as an instantaneous overcurrent when an electric current flowing through a semiconductor switching device exceeds a certain threshold level and as an instantaneous overvoltage when the voltage between both ends of a capacitor exceeds a certain threshold level, and by halting the switching operations of the power supply circuit or the switching operations of a three-phase inverter.

Also, there has been presented a method for preventing component damage or abnormal noise by detecting the electric current of a power supply circuit, actively detecting a power supply voltage anomaly according to the magnitude of the electric current, and halting the power supply circuit or an output operation circuit in case of an anomaly. (cf.

Patent Document 1)

(PRIOR ART DOCUMENT)

Patent Document 1: Japanese Patent Laid-open No. 2006-109583
EP 1 811 645 A1 discloses an apparatus with the features in the preamble of present claim 1. Other conventional devices are described in DE 10 2004 025176 A1, US 4 678 980 A, and US 4 620 296 A.

SUMMARY OF THE INVENTION

In conventional overcurrent detection methods or overvoltage detection methods, stress is applied to components in case of a power supply voltage anomaly. Such stress accumulates gradually as anomalies occur repeatedly and may cause damage to the components.

Also, in methods for detecting voltage anomalies by using the current value of a power supply circuit, such as the one disclosed in Patent Document 1, whether there is an anomaly or not is determined based on the magnitude of electric current. Therefore, when there is variation in a load of a motor connected three-phase inverter, a false detection may occur even when a power supply voltage is normal. For example, when a motor load increases rapidly, a resultant increase in power supply current can be judged as an instantaneous voltage drop, or when a motor load decreases rapidly, a resultant decrease in supply power current can be judged as an instantaneous power failure.

An object of the present invention is to protect power supply circuit components by quickly detecting any instantaneous drop in power supply voltage and any instantaneous power failure without fail in a low-cost configuration, and thereby to improve reliability of the power supply circuit.

According to one aspect of the present invention, a three-phase inverter power supply circuit protecting apparatus includes: a power supply circuit for converting an AC input voltage into a DC output voltage; a three-phase inverter circuit for receiving the DC output voltage as input and converting it into a three-phase AC voltage; and a power supply current detecting circuit for detecting the power supply current of the power supply circuit. The three-phase inverter power supply circuit protecting apparatus is provided with: an inverter input/output power calculating means for calculating the input/output power or a value equivalent to the input/output power of the three-phase inverter; a power supply voltage anomaly judging means for judging whether there is a power supply voltage anomaly or not based on the relationship between the power supply current obtained by the power supply current detecting circuit and the input/output power or the value equivalent to the input/output power of the three-phase inverter obtained by the inverter input/output power calculating means; and a control means for halting the three-phase inverter circuit in response to the output of the power supply voltage anomaly judging means.

Here, the input/output power or a value equivalent to the input/output power of the three-phase inverter may be any one of the following:

(1) the input power
(2) the output power
(3) the input current of the inverter
(4) the phase current of the inverter

The values of (3) and (4) can represent the values equivalent to (1) and (2).

According to another aspect of the present invention, a three-phase inverter power supply circuit protecting apparatus includes: a power supply circuit for converting an AC input voltage into a DC output voltage; a three-phase inverter circuit for receiving the DC output voltage as input and converting it into a three-phase AC voltage; a power supply current detecting circuit for detecting the power supply current of the power supply circuit; an input current detecting circuit for detecting the electric current flowing through the DC input terminals of the three-phase inverter circuit; and an input voltage detecting circuit for detecting the voltage between the DC input terminals of the three-phase inverter circuit. The three-phase inverter power supply circuit protecting apparatus is provided with: an inverter input power calculating means for calculating an inverter input power based on the DC current obtained by the input current detecting circuit and the DC voltage obtained by the input voltage detecting circuit; a power supply voltage anomaly judging means for judging whether there is a power supply voltage anomaly or not based on the relationship between the power supply current and the inverter input power; and a control means for halting the three-phase inverter circuit in response to the output of the power supply voltage anomaly judging means.

According to yet another aspect of the present invention, a three-phase inverter power supply circuit protecting apparatus includes: a power supply circuit for converting an AC input voltage into a DC output voltage; a three-phase inverter circuit for receiving the DC output voltage as input and converting it into a three-phase AC voltage; a power supply current detecting circuit for detecting the power supply current of the power supply circuit; and a phase current detecting circuit for detecting the phase current of the three-phase inverter. The three-phase inverter power supply circuit protecting apparatus is provided with: an inverter output voltage calculating means for calculating the output voltage of the three-phase inverter; an inverter output power calculating means for calculating the output power of the three-phase inverter based on the phase current and the output voltage of the three-phase inverter; a power supply voltage anomaly judging means for judging whether there is a power supply voltage anomaly or not based on the relationship between the power supply current and the output power of the three-phase inverter; and a control means for halting the three-phase inverter circuit in response to the output of the power supply voltage anomaly judging means.

According to even yet another aspect of the present invention, a three-phase inverter power supply circuit protecting apparatus includes: a power supply circuit for converting an AC input voltage into a DC output voltage; a three-phase inverter circuit for receiving the DC output voltage as input and converting it into a three-phase AC voltage; a power supply current detecting circuit for detecting the power supply current of the power supply circuit; and an inverter input current detecting circuit for detecting the electric current flowing through the DC input terminals of the three-phase inverter circuit. The three-phase inverter power supply circuit protecting apparatus is provided with: a phase current reconstructing means for reconstructing an electric current flowing through an AC load of the three-phase inverter based on the DC current obtained by the inverter input current detecting circuit; an inverter output voltage calculating means for calculating the output voltage of the three-phase inverter; an inverter output power calculating means for calculating an inverter output power based on the phase current obtained by the phase current reconstructing means and the output voltage obtained by the inverter output voltage calculating means; a power supply voltage anomaly judging means for judging whether there is a power supply voltage anomaly or not based on the relationship between the power supply current and the output power of the inverter circuit; and a control means for halting the three-phase inverter circuit in response to the output of the power supply voltage anomaly judging means.

According to the preferred embodiments of the present invention, power supply voltage anomaly judgment is performed based on information on power supply current flowing through a power supply circuit and the input power information or the output power information of a three-phase inverter, and in case of a voltage anomaly, inverter control and/or converter control are halted. This will allow a three-phase inverter power supply circuit protecting apparatus to protect power supply circuit components by quickly detecting any instantaneous drop in power supply voltage and any instantaneous power failure with high accuracy, thereby improving reliability of the power supply circuit.

Also, according to the preferred embodiments of the present invention, there can be obtained a three-phase inverter power supply circuit protecting apparatus in a low-cost configuration, since all of the resistors used to detect power supply current and input current are the same resistors already mounted to prevent overcurrent.

In addition, according to the preferred embodiments of the present invention, a three-phase inverter power supply circuit protecting apparatus can detect anomalies with high accuracy by disabling power supply voltage anomaly judgment when a power supply current and an inverter input/output power are smaller than predetermined values to avoid false detections due to erroneous power supply voltage anomaly judgment.

Other objects and features of the present invention will be demonstrated in the embodiments hereinafter described.

BRIEF DESCRIPTION OF DRAWINGS

FIG. 1 is a block diagram showing an overall configuration of a motor drive system as a three-phase inverter power supply circuit protecting apparatus in accordance with Embodiment 1 of the present invention.

FIG. 2 is an explanatory graph showing an example of a power supply voltage anomaly judgment region in accordance with Embodiment 1 of the present invention.

FIG. 3 is a process flowchart of a power supply voltage anomaly judging means 27 in accordance with Embodiment 1 of the present invention.

FIG. 4 is an explanatory graph showing another example of a power supply voltage anomaly judgment region in accordance with Embodiment 1 of the present invention.

FIG. 5 is a flowchart of a power supply voltage anomaly judgment process in consideration of FIG. 4 in accordance with Embodiment 3 of the present invention.

FIG. 6 is a block diagram showing an overall configuration of a motor drive system as a three-phase inverter power supply circuit protecting apparatus in accordance with Embodiment 2 of the present invention.

FIG. 7 is a block diagram showing an overall configuration of a motor drive system as a three-phase inverter power supply circuit protecting apparatus in accordance with Embodiment 3 of the present invention.

FIG. 8 is an explanatory graph showing an example of a power supply voltage anomaly judgment region in accordance with Embodiment 3 of the present invention.

FIG. 9 is a process flowchart of a power supply voltage anomaly judging means in consideration of FIG. 8 in accordance with Embodiment 3 of the present invention.

FIG. 10 is a block diagram showing an overall configuration of a motor drive system as a three-phase inverter power supply circuit protecting apparatus in accordance with Embodiment 4 of the present invention.

BEST MODE FOR CARRYING OUT THE INVENTION

The preferred embodiments of the present invention will be described hereinafter with reference to the accompanying drawings.

Embodiment 1

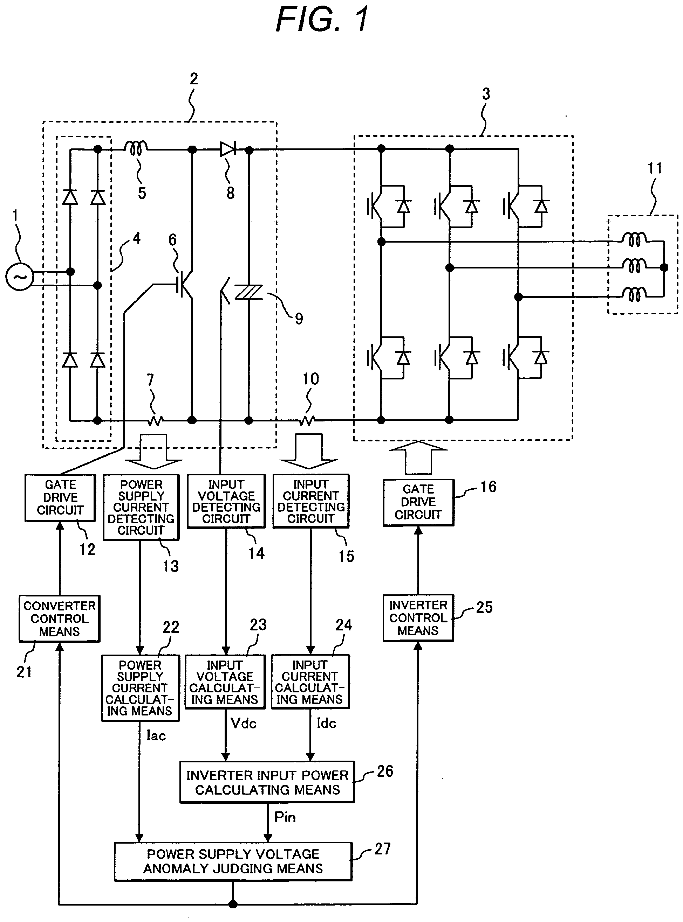

FIG. 1 is a block diagram showing an overall configuration of a motor drive system as a three-phase inverter power supply circuit protecting apparatus in accordance with Embodiment 1 of the present invention. This motor drive system of Embodiment 1 is suitable for use as a compressor drive unit used in water heaters, air conditioners, etc.

<Description of Overall Configuration>

In FIG. 1, the motor drive system is provided with a power supply circuit 2 for converting an AC input voltage supplied from a single-phase AC power supply 1 into a predetermined output voltage and a three-phase inverter circuit 3 for receiving the output voltage as input and converting it into a three-phase AC voltage. The motor drive system has an AC motor 11 as an AC load of the three-phase inverter circuit 3.

<Description of Power Supply Circuit>

The power supply circuit is provided with: a rectifier circuit 4 connected to the single-phase power supply 1; a reactor 5 connected on one end to one output terminal of the rectifier circuit 4; a power supply current detection resistor 7 connected on one end to the other output terminal of the rectifier circuit 4; and a power supply semiconductor switching device 6 connected to the other end of the reactor 5 and to the other end of the power supply current detection resistor 7. Also, the power supply circuit has a capacitor connected via a diode 8 between the collector and the emitter of the power supply semiconductor switching device 6. Well known as a boost chopper, this circuit can control the inter-terminal voltage of the capacitor 9 by performing the switching operations of the semiconductor switching device 6 in response to gate drive signals from a gate drive circuit 12.

<Description of Three-Phase Inverter Circuit>

In the three-phase inverter circuit 3, the DC negative terminal of the capacitor 9 is connected to one end of an input current detection resistor 10. In the three-phase inverter circuit 3, two switching devices are connected in series per each phase between the DC positive terminal of the capacitor 9 and the other terminal of the input current detection resistor 10, and the serial connection points are three-phase AC terminals. Each switching device has a free wheel diode that is antiparallel. This three-phase inverter circuit 3 generates variable-voltage variable-frequency three-phase AC voltage in response to gate drive signals from a gate drive circuit 16 and supplies power to the motor 11.

<Description of Power Supply Current Average Value>

Electric current information detected by the power supply current detection resistor 7 is amplified by a power supply current detecting circuit 13 and inputted into a power supply current calculating means 22. The power supply current calculating means 22 calculates a power supply current average value to be used for power supply voltage anomaly judgment. At 50 Hz, a power supply current average value during 1/100 second is calculated, and at 60 Hz, a power supply current average value during 1/120 second is calculated. However, 1/100 second and 1/120 second are both examples, and the time during which a supply current average is calculated may be any time as long as any power supply current average value can be calculated. Also, an RMS value may be calculated instead of an average value.

<Description of Inverter Input Power>

Electric current information detected by the input current detection resistor 10 is amplified by an input current detecting circuit 15 and inputted into an input current calculating means 24. The input current calculating means 24 calculates a DC current value Idc for calculating an inverter input power. Also, the inter-terminal voltage of the capacitor 9 is detected by an input voltage detecting circuit 14 and inputted into an input voltage calculating means 23. The input voltage calculating means 23 calculates a DC voltage value Vdc for calculating an inverter input power. Setting the DC current value Idc and the DC voltage value Vdc at average values during several milliseconds is effective in reducing the influence of noise. An inverter input power calculating means 26 calculates an inverter input power Pin by multiplying the DC voltage value Vdc outputted by the input voltage calculating means 23 by the DC current value Idc outputted by the input current calculating means 24.

<Description of Power Supply Voltage Anomaly Judgment>

A power supply voltage anomaly judging means 27 performs protection judgment using the power supply current average value lac outputted by the power supply current calculating means 22 and the inverter input power Pin outputted by the inverter input power calculating means 26. This means outputs anomaly halt signals to an inverter control means 25 and a converter control means 21 when it judges that there is a power supply voltage anomaly. When receiving an anomaly halt signal, the inverter control means 25 outputs an operation halt signal to the gate drive circuit controlling the inverter circuit 3, and the converter control means 21 outputs an operation halt signal to the gate drive circuit controlling the power supply circuit 2, thereby halting their operations.
Since the processes of the inverter control means 25 and the converter control means 21 in normal operations are conventionally well known, the detailed description of them will be omitted.

<Description 1 of Power Supply Voltage Anomaly Judgment Region>

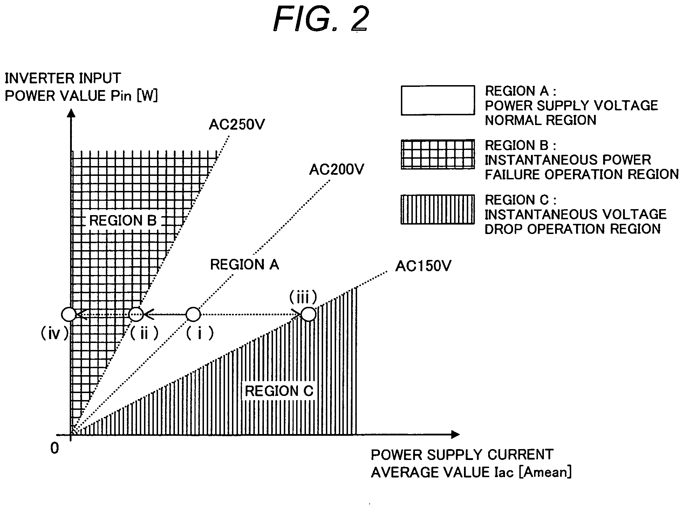

FIG. 2 is an explanatory graph showing an example of a power supply voltage anomaly judgment region in accordance with Embodiment 1 of the present invention. In this example, the single-phase AC input power voltage is 200V, and Region A, Region B, and Region C represent a power supply voltage normal region, an instantaneous power failure operation region, and an instantaneous voltage drop operation region, respectively. When the voltage is normal, the coordinates of the power supply current average value Iac and the inverter input power value Pin exist near the dotted line of 200V AC in Region A even when the inverter input power Pin increases and decreases due to load variation. Therefore, no anomaly judgment is performed even when the amount of change of the power supply current average value Iac increases and decreases, and a normal operation is continued. When the power supply voltage changes sharply with a constant input power and no load variation, the condition (i) changes to the condition (ii) or (iii) in FIG. 2, and a power supply voltage anomaly is detected. Also, in case of an instantaneous power failure, the supply current instantaneous value becomes 0A immediately after the occurrence of the power failure, and the power supply current average value Iac changes from the condition (i) to the condition (iv). Here, the present embodiment has the advantage of being able to detect the occurrence of an instantaneous power failure at the stage of (ii) and to halt inverter control and converter control immediately.

A delay in detecting the occurrence of an instantaneous power failure allows the three-phase inverter circuit 3 to continue operating on power stored in the capacitor 9, resulting in a drop in the inter-terminal voltage of the capacitor 9. As a result, an inrush current flows to charge the capacitor and over current occurs when power is restored after the power failure.

<Power Supply Voltage Anomaly Judgment Process Flow>

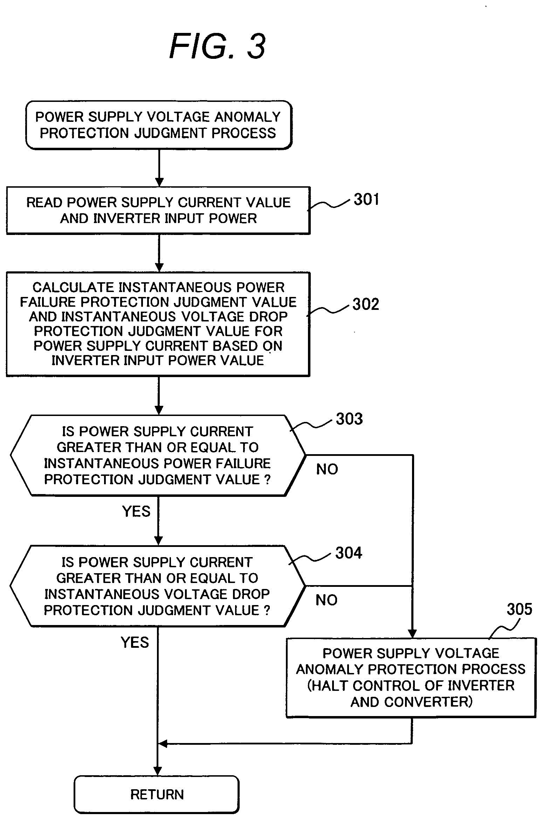

FIG. 3 is a process flowchart of the power supply voltage anomaly judging means 27 in accordance with Embodiment 1 of the present invention.

In this process: in Step 301, the power supply current average value Iac calculated by the power supply current calculating means 22 and the inverter input power Pin calculated by the inverter input power calculating means 26 are read in; in Step 302, an instantaneous power failure protection judgment value and an instantaneous voltage drop protection judgment value for the power supply current average value Iac commensurate with the inverter input power Pin in Step 301 are calculated; in Step 303, as a power supply voltage anomaly judgment, instantaneous power failure protection judgment is performed using the power supply current average value Iac in Step 301; and in Step 304, instantaneous voltage drop protection judgment is performed. Step 305 is a process performed when it is judged that there is a voltage anomaly in Step 303 or Step 304, and in this process inverter control and converter control are halted.

<Description of Power Supply Voltage Anomaly Non-Judgment>

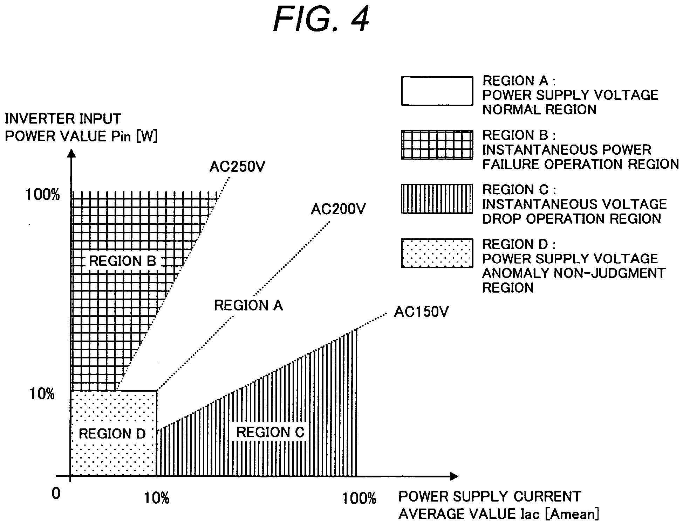

FIG. 4 is an explanatory graph showing another example of a power supply voltage anomaly judgment region in accordance with Embodiment 1 of the present invention. FIG. 4 is different from FIG. 2 in that it has Region D, a power supply voltage anomaly non-judgment region. In Region D, the above-described power supply voltage anomaly judgment is not performed. When the inverter input power value Pin and the power supply current average value Iac are small in such cases as a low motor RPM, the accuracy of power supply voltage anomaly judgment deteriorates, and a false detection may occur. Also, in Region D, it is extremely unlikely that any overcurrent or overvoltage will require a protection operation for circuit components, since the load is light. Although the inverter input power Pin is used in FIG. 4, an inverter output power Pout may be used instead.

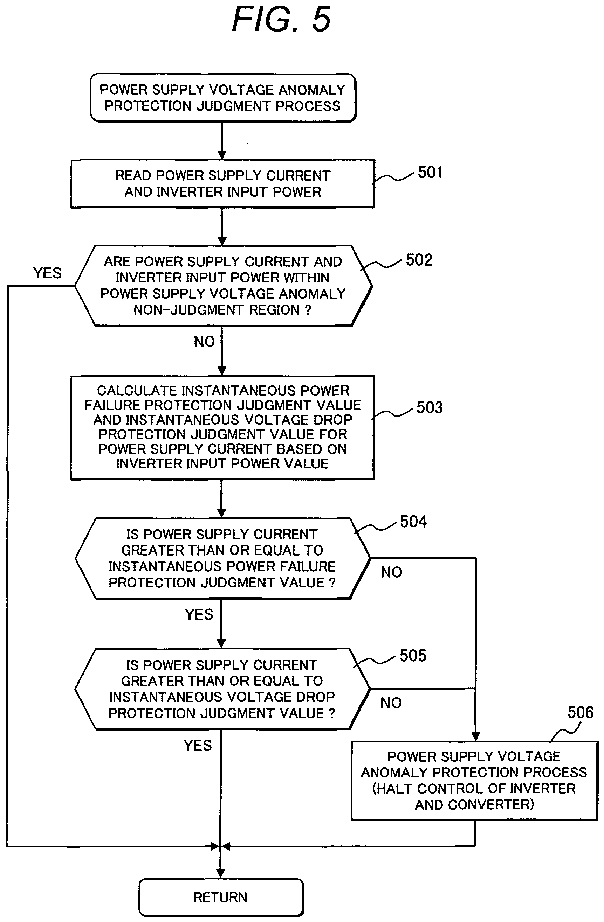

FIG. 5 is a flowchart of a power supply voltage anomaly judgment process in consideration of FIG. 4. The difference from FIG. 3 is Step 502. In Step 502, it is determined whether or not the power supply current average value Iac and the inverter input power value Pin read in Step 501 are within Region D in FIG. 4. When they are within Region D, the power supply voltage anomaly judgment process is not performed. When they are outside Region D, power supply voltage anomaly judgment is performed. Although the inverter input power Pin is used in FIG. 5, an inverter output power Pout may be used instead.

As described above, according to Embodiment 1 of the present invention, first, the electric current flowing through the power supply circuit is detected to calculate the power supply current average value Iac. Meanwhile, the inverter input power Pin is calculated based on the DC voltage value Vdc between the DC input terminals of the three-phase inverter and the value Idc of the DC current flowing through the DC input terminals of the three-phase inverter. Then, power supply voltage anomaly judgment is performed based on the relationship between the power supply current average value Iac and the inverter input power value Pin, and when it is judged that there is a voltage anomaly, inverter control and converter control are halted. Accordingly, any instantaneous drop in power supply voltage and any instantaneous power failure can be detected quickly with high accuracy, and therefore power supply circuit components can be protected. As a result, there can be obtained a power supply circuit protecting apparatus with improved reliability.

In addition, false detections of power supply voltage anomaly judgment are avoided by disabling power supply voltage anomaly judgment when the power supply current average value Iac and the inverter input power value Pin are smaller than predetermined values. As a result, there can be obtained a power supply circuit protecting apparatus with high detection accuracy.

Furthermore, since the power supply current detection resistor 7 and the input current detection resistor 10 in current detection units are the same resistors already mounted to prevent overcurrent, there can be obtained a power supply circuit protecting apparatus with a low-cost configuration.

Embodiment 2

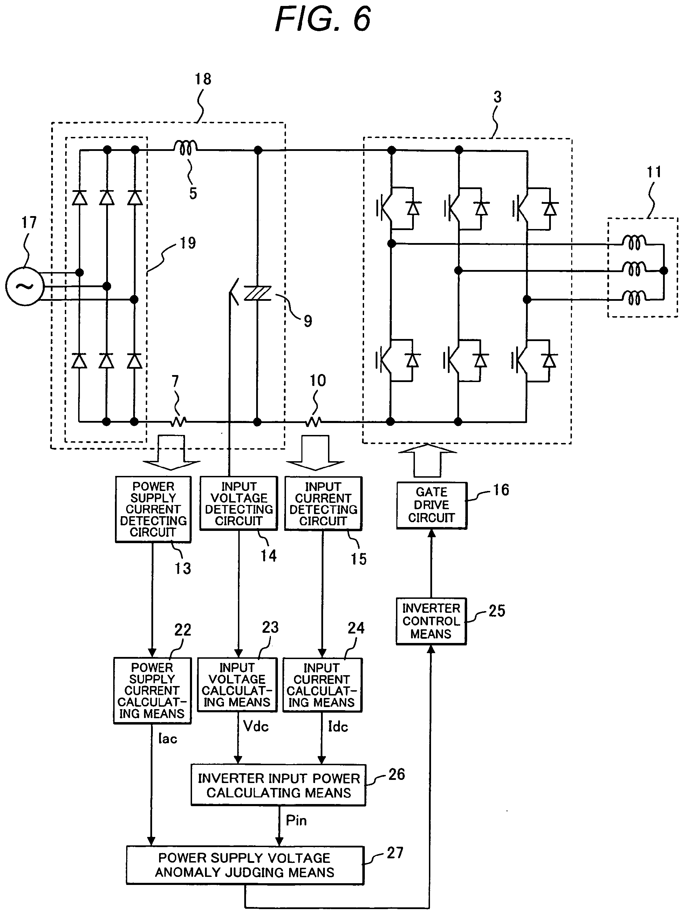

FIG. 6 is a block diagram showing an overall configuration of a motor drive system as a three-phase inverter power supply circuit protecting apparatus in accordance with Embodiment 2 of the present invention. In FIG. 6, the same items as those in FIG. 1 are designated by the same reference numerals, and the description of them will be omitted. Only the different items will be described hereinafter.

The motor drive system of Embodiment 2 is different from that in Embodiment 1 in that it has a three-phase AC power supply 17, a power supply circuit 18, and a three-phase rectifier circuit 19, and that it does not have any converter control.

In FIG. 6, the motor drive system is provided with the power supply circuit 18 for converting an AC input voltage supplied from the three-phase AC power supply 17 into a predetermined output voltage and a three-phase inverter circuit 3 for receiving the output voltage as input and performing a predetermined operation to drive a motor 11. The motor drive system has an AC motor 11 as an AC load of the three-phase inverter.

Unlike its counterpart in Embodiment 1, the power supply circuit 18 is provided with: the three-phase rectifier circuit 19 connected to the three-phase power supply 17, a reactor 5 connected on one end to one output terminal of the three-phase rectifier circuit 19; a power supply current detection resistor 7 connected on one end to the other output terminal of the three-phase rectifier circuit 19; and a capacitor 9 connected to the other end of the reactor 5 and to the other end of the power supply current detection resistor 7. The power supply circuit 18 does not have the power supply semiconductor switching device 6, the gate drive circuit 12, and the converter control means 21 shown in FIG. 1.

As in the case of Embodiment 1, in the motor drive system shown in FIG. 6, power supply voltage anomaly judgment is performed based on information on the electric current flowing through the power supply circuit and the input power information of the three-phase inverter, and when it is judged that there is a power supply voltage anomaly, inverter control can be halted.

As described above, according to Embodiment 2 of the present invention, first, the electric current flowing through the power supply circuit is detected to calculate a power supply current average value Iac. Next, an inverter input power Pin is calculated based on the DC voltage value Vdc between the DC input terminals of the three-phase inverter and the value Idc of the DC current flowing through the DC input terminals of the three-phase inverter. Then, power supply voltage anomaly judgment is performed based on the relationship between the power supply current average value Iac and the inverter input power value Pin, and when it is judged that there is a voltage anomaly, inverter control is halted. Accordingly, any instantaneous drop in power supply voltage and any instantaneous power failure can be detected quickly with high accuracy, and therefore power supply circuit components can be protected. As a result, there can be obtained a power supply circuit protecting apparatus with improved reliability.

In addition, since the power supply current detection resistor 7 and an input current detection resistor 10 in the current detection unit are the same resistors already mounted to prevent overcurrent, there can be obtained a power supply circuit protecting apparatus with a low-cost configuration.

Embodiment 3

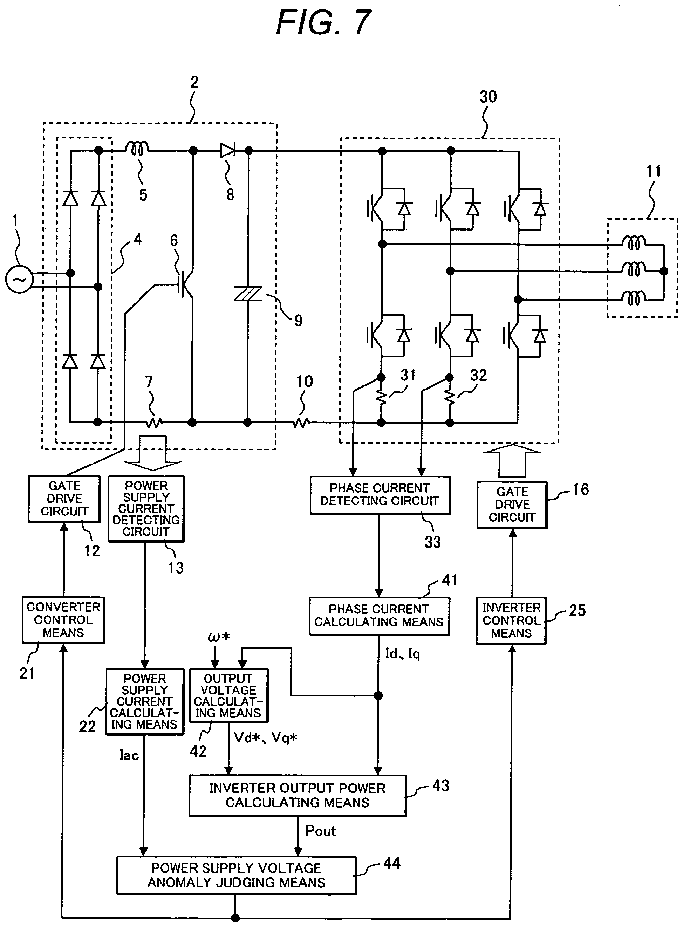

FIG. 7 is a block diagram showing an overall configuration of a motor drive system as a three-phase inverter power supply circuit protecting apparatus in accordance with Embodiment 3 of the present invention. In FIG. 7, the same items as those in FIG. 1 are designated by the same reference numerals, and the description of them will be omitted. Only the different items will be described hereinafter.

The motor drive system of Embodiment 3 is different from that in Embodiment 1 in that it has phase current detection resistors 31 and 32, a phase current detecting circuit 33, a phase current calculating means 41, an output voltage calculating means 42, and an inverter output power calculating means 43.

In FIG. 7, the motor drive system is provided with a power supply circuit 2 for converting an AC input voltage supplied from a single-phase AC power supply 1 into a predetermined output voltage and a three-phase inverter circuit 30 for receiving the output voltage as input and performing a predetermined operation to drive a motor 11. Also, the motor drive system has an AC motor 11 as an AC load of the three-phase inverter.

As a difference from Embodiment 1, the phase current detection resistors for two phases are connected to the three-phase inverter circuit 30. However, one phase current detection resistor may be connected to each of the three phases.

<Description of Inverter Output Power>

Electric current information detected by the phase current detection resistors 31 and 32 is amplified by the phase current detecting circuit 33 and inputted into the phase current calculating means 41. The phase current calculating means 41 calculates the electric current of the remaining one phase based on the phase current information for two phases, before performing coordinate transformation from a three-phase AC quantity in a three-phase fixed coordinate system (u-v-w) into a DC quantity in a rotating coordinate system (d-q) and calculating a d-axis current detection value Id and a q-axis current detection value Iq. Here, since coordinate transformation from a fixed coordinate system into a rotating coordinate system is conventionally well known, the description of it will be omitted.

The d-axis current detection value Id and the q-axis current detection value Iq thus calculated are outputted to the inverter output power calculating means 43 and the output voltage calculating means 42.

As shown by Eq. (1), the output voltage calculating means 42 performs a vector operation using the d-axis and q-axis current detection values Id and Iq, a velocity command value ω*, and a motor constant and outputs output voltage command values Vd* and Vq*. Here, in Eq. (1), R represents a motor winding resistance value, Ld represents a d-axis inductance, Lq represents a q-axis inductance, and Ke represents an induced voltage constant. However, a velocity detection value may be used instead of the velocity command value ω*.

$$Vd* = R \times Id - \omega* \times Ld \times Iq$$

$$Vd* = R \times Iq + \omega* \times Lq \times Id + \omega* \times Ke \ldots\ldots(1)$$

The inverter output power calculating means 43 calculates an inverter output power Pout by performing multiplications as shown in Eq. (2) using the output voltage command values Vd* and Vq* calculated by the output voltage calculating means 42 and the d-axis and q-axis current detection values Id and Iq calculated by the phase current calculating means 41.

$$Pout = Vd* \times Id + Vq* \times Iq\ldots\ldots\ldots\ldots\ldots(2)$$

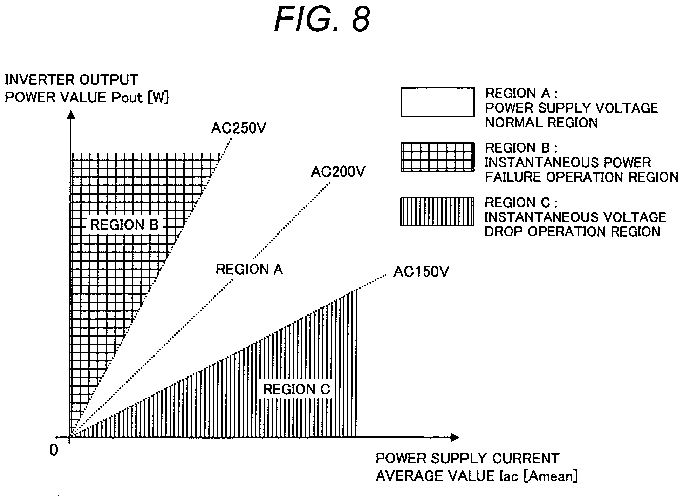

FIG. 8 is an explanatory graph showing an example of a power supply voltage anomaly judgment region in accordance with Embodiment 3 of the present invention. The difference from FIG. 2 of Embodiment 1 is that the vertical axis represents the inverter output power Pout. Other than that, FIG. 8 is the same as FIG. 2, and the description of this graph will be omitted.

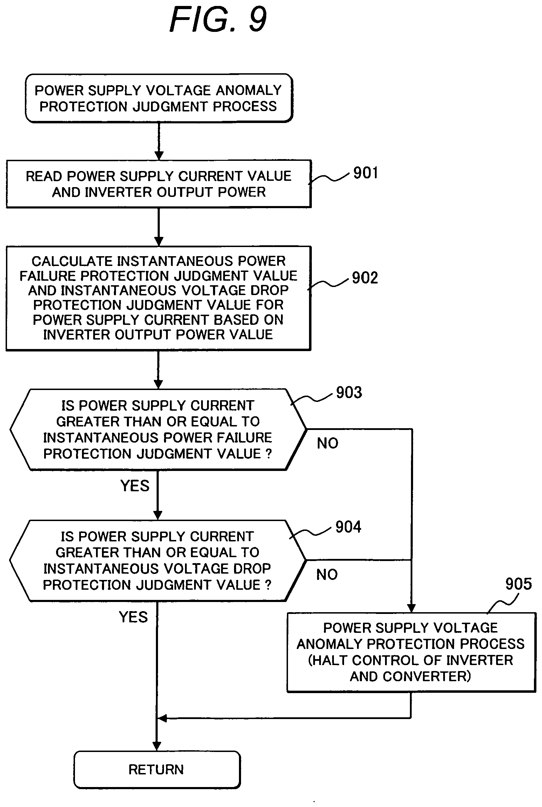

FIG. 9 is a process flowchart of a power supply voltage anomaly judging means 44 in consideration of FIG. 8. The difference from FIG. 3 of Embodiment 1 is that data used in Step 901 and Step 902 is the inverter output power Pout. Other than that, FIG. 9 is the same as FIG. 3, and the description of this flowchart will be omitted.

As described above, according to Embodiment 3 of the present invention, power supply voltage anomaly judgment is performed based on information on the electric current flowing through the power supply circuit and the output power information of the three-phase inverter, and when it is judged that there is a voltage anomaly, inverter control and converter control are halted. Accordingly, any instantaneous drop in power supply voltage and any instantaneous power failure can be detected quickly with high accuracy, and therefore power supply circuit components can be protected. As a result, there can be obtained a power supply circuit protecting apparatus with improved reliability of the power supply circuit.

Embodiment 4

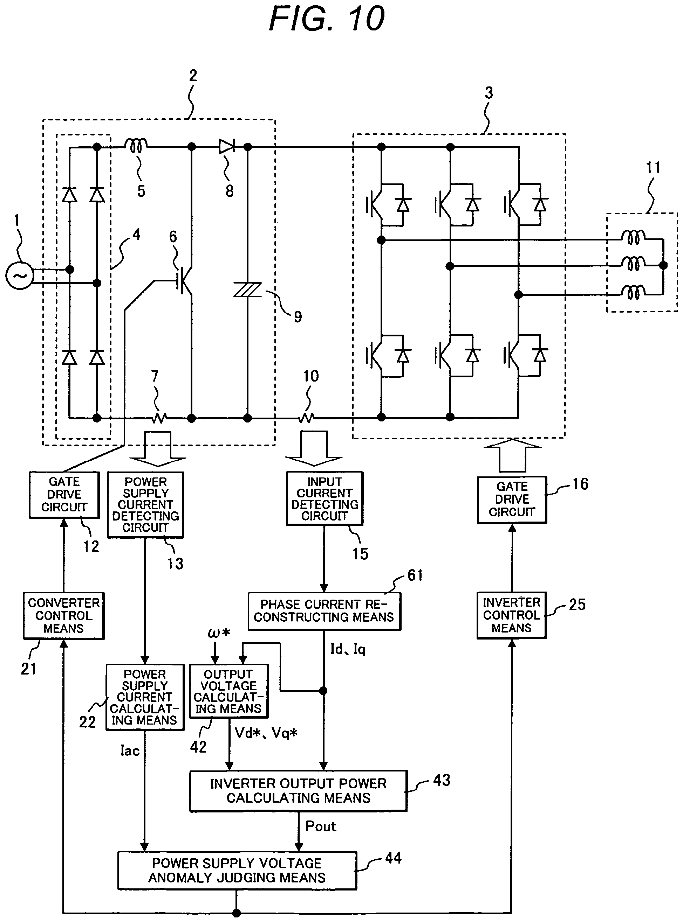

FIG. 10 is a block diagram showing an overall configuration of a motor drive system as a three-phase inverter power supply circuit protecting apparatus in accordance with Embodiment 4 of the present invention. In FIG. 10, the same items as those in FIG. 7 are designated by the same reference numerals, and the description of them will be omitted. Only the different items will be described hereinafter.

The motor system of Embodiment 4 is different from that in Embodiment 3 in that it has an input current detecting circuit 15 and a phase current reconstructing means 61.

In FIG. 10, electric current information detected by an input current detection resistor 10 is amplified by an input current detecting circuit 15 and inputted as DC current information into the phase current reconstructing means 61. The phase current reconstructing means 61 reconstructs a phase current flowing through a motor winding using the inputted DC current information. It performs coordinate transformation as in the case of Embodiment 3 and calculates d-axis and q-axis current detection values Id and Iq based on the reconstructed phase current information. Here, since reconstructing a phase current from DC current information is conventionally well known, the detailed description of it will be omitted.

As described above, according to Embodiment 4 of the present invention, power supply voltage anomaly judgment is performed based on information on the electric current flowing through the power supply circuit and the output power information of the three-phase inverter, and when it is judged that there is a voltage anomaly, inverter control and converter control are halted. Accordingly, any instantaneous drop in power supply voltage and any instantaneous power failure can be detected quickly with high accuracy, and therefore power supply circuit components can be protected. As a result, there can be obtained a power supply circuit protecting apparatus with improved reliability of the power supply circuit.

In addition, since a power supply current detection resistor 7 and the input current detection resistor 10 in the current detection unit are the same resistors already mounted to prevent overcurrent, there can be obtained a power supply circuit protecting apparatus with a low-cost configuration.

(LEGEND)

| 1 | single-phase AC power supply |
|---|---|
| 2 | power supply circuit |
| 3 | three-phase inverter circuit |
| 4 | rectifier circuit |
| 5 | reactor |
| 6 | power supply semiconductor switching device |
| 7 | power supply current detection resistor |
| 8 | diode |
| 9 | capacitor |
| 10 | input current detection resistor |
| 11 | motor |
| 12 | gate drive circuit |
| 13 | power supply current detecting circuit |
| 14 | input voltage detecting circuit |
| 15 | input current detecting circuit |
| 16 | gate drive circuit |
| 17 | three-phase AC power supply |
| 18 | power supply circuit |
| 19 | three-phase rectifier circuit |
| 21 | converter control means |
| 22 | power supply current calculating means |
| 23 | input voltage calculating means |
| 24 | input current calculating means |
| 25 | inverter control means |
| 26 | inverter input power calculating means |
| 27 | power supply voltage anomaly judging means |
| 30 | three-phase inverter circuit |
| 31, 32 | phase current detection resistor |
| 33 | phase current detecting circuit |
| 41 | phase current calculating means |
| 42 | output voltage calculating means |
| 43 | inverter output power calculating means |
| 44 | power supply voltage anomaly judging means |
| 61 | phase current reconstructing means |
| lac | power supply current average value |
| Vdc | DC voltage value |
| Idc | DC current value |
| Pin | inverter input power |
| Vd* | d-axis voltage command value |
| Vq* | q-axis voltage command value |
| Id | d-axis current detection value |
| Iq | q-axis current detection value |
| Pout | inverter output power |

**Claims**

1. A three-phase inverter power supply circuit protecting apparatus comprising:

   a power supply circuit (2) for converting an AC input voltage into a DC output voltage;
   a three-phase inverter circuit (3; 30) for receiving the DC output voltage as input and converting it into a three-phase AC voltage;

a power supply current detecting circuit (13) for detecting power supply current of the power supply circuit (2);

a power supply voltage anomaly judging means (27, 44) for judging whether there is a power supply voltage anomaly or not; and

a control means (25) for halting the three-phase inverter circuit (3; 30) in response to an output of the power supply voltage anomaly judging means (27, 44),

**characterised in that**:

the apparatus further comprises an inverter input/output power calculating means (26, 43) for calculating an input or an output power or a value equivalent to an input or an output power of the three-phase inverter; and

the power supply voltage anomaly judging means (27, 44) is adapted to judge whether there is a power supply voltage anomaly or not based on a relationship between the power supply current obtained by the power supply current detecting circuit (13) and the input or the output power or the value equivalent to the input or the output power of the three-phase inverter.

2.   The apparatus of claim 1, further comprising:

an input current detecting circuit (15) for detecting an electric current flowing through DC input terminals of the three-phase inverter circuit (3); and

an input voltage detecting circuit (14) for detecting a DC voltage between the DC input terminals of the three-phase inverter circuit (3);

wherein:

the inverter input/output power calculating means (26, 43) is an inverter input power calculating means (26) for calculating the inverter input power based on the DC current obtained by the input current detecting circuit (15) and the DC voltage obtained by the input voltage detecting circuit (14); and

the power supply voltage anomaly judging means (27) is adapted to judge whether there is a power supply voltage anomaly or not based on a relationship between the power supply current and the inverter input power.

3.   The apparatus of claim 1, further comprising:

a phase current detecting circuit (33) for detecting a phase current of the three-phase inverter circuit (30);

an inverter output voltage calculating means (42) for calculating an output voltage of the three-phase inverter;

wherein:

the inverter input/output power calculating means (26, 43) is an inverter output power calculating means (43) for calculating the inverter output power based on the phase current obtained by the phase current detecting circuit (33) and the output voltage obtained by the inverter output voltage calculating means (42); and

the power supply voltage anomaly judging means (44) is adapted to judge whether there is a power supply voltage anomaly or not based on a relationship between the power supply current and the output power of the three-phase inverter.

4.   The apparatus of claim 1, further comprising:

an inverter input current detecting circuit (15) for detecting a DC electric current flowing through DC input terminals of the three-phase inverter circuit (3);

a phase current reconstructing means (61) for reconstructing a phase current flowing through an AC load of the three-phase inverter from the DC electric current detected by the inverter input current detecting circuit (15);

an inverter output voltage calculating means (42) for calculating an output voltage of the three-phase inverter;

wherein

the inverter input/output power calculating means (26, 43) is an inverter output power calculating means (43) for calculating the inverter output power based on the phase current obtained by the phase current reconstructing means (61) and the output voltage obtained by the inverter output voltage calculating means (42); and

the power supply voltage anomaly judging means (44) is adapted to judge whether there is a power supply voltage anomaly or not based on a relationship between the power supply current and the inverter output power.

5. The apparatus of any preceding claim, wherein the power supply circuit (2) and the three-phase inverter circuit (3; 30) are halted when the power supply voltage anomaly judging means (27, 44) judges that there is a power supply voltage anomaly.

6. The apparatus of any preceding claim, wherein the power supply voltage anomaly judging means (27, 44) is a means for judging whether there is an instantaneous power failure or not.

7. The apparatus of any of claims 1-5, where the power supply voltage anomaly judging means (27, 44) is a means for judging whether there is an instantaneous voltage drop or not.

8. The apparatus of claim 1 or 2, wherein the power supply voltage anomaly judging means (27, 44) is disabled when both of the power supply current and the inverter input power are smaller than predetermined values.

9. The apparatus of any of claims 1, 3 and 4, wherein the power supply voltage anomaly judging means (27, 44) is disabled when both of the power supply current and the inverter output power are smaller than predetermined values.

10. The apparatus of any preceding claim, wherein an AC load of the three-phase inverter is a three-phase AC motor (11).


**Patentansprüche**

1. Dreiphasenumrichter-Leistungsversorgungsschaltungs-Schutzgerät mit
einer Leistungsversorgungsschaltung (2) zum Umwandeln einer AC-Eingabespannung in eine DC-Ausgabespannung,
einer Dreiphasenumrichterschaltung (3; 30) zum Empfangen der DC-Ausgabespannung als Eingabe und deren Umwandlung in eine Dreiphasen-AC-Spannung,
einer Leistungsversorgungsstrom-Erfassungsschaltung (13) zum Erfassen des Leistungsversorgungsstroms der Leistungsversorgungsschaltung (2),
einer Leistungsversorgungsspannungsanomalie-Beurteilungseinrichtung (27, 44) zum Beurteilen, ob eine Leistungsversorgungsspannungsanomalie vorliegt oder nicht, und
einer Steuereinrichtung (25) zum Anhalten der Dreiphasenumrichterschaltung (3; 30) gemäß einem Ausgabesignal der Leistungsversorgungsspannungsanomalie-Beurteilungseinrichtung (27, 44),
**dadurch gekennzeichnet, dass**
das Gerät ferner eine Umrichter-Eingabe/Ausgabe-Leistungsberechnungseinrichtung (26, 43) aufweist, um eine Eingabe- oder eine Ausgabeleistung oder einen der Eingabe- oder der Ausgabeleistung entsprechenden Wert des Dreiphasenumrichters zu berechnen, und
die Leistungsversorgungsspannungsanomalie-Beurteilungseinrichtung (27, 44) dazu ausgelegt ist, basierend auf einer Beziehung zwischen dem durch die Leistungsversorgungsstrom-Erfassungsschaltung (13) erhaltenen Leistungsversorgungsstrom und der Eingabe- oder der Ausgabeleistung oder des der Eingabe- oder der Ausgabeleistung entsprechenden Werts des Dreiphasenumrichters zu beurteilen, ob eine Leistungsversorgungsspannungsanomalie vorliegt oder nicht.

2. Gerät nach Anspruch 1, ferner mit
einer Eingabestromerfassungsschaltung (15) zum Erfassen eines elektrischen Stromflusses durch DC-Eingabeanschlüsse der Dreiphasenumrichterschaltung (3) und
einer Eingabespannungserfassungsschaltung (14) zum Erfassen einer DC-Spannung zwischen den DC-Eingabeanschlüssen der Dreiphasenumrichterschaltung (3),
wobei
die Umrichter-Eingabe/Ausgabe-Leistungsberechnungseinrichtung (26, 43) eine Umrichter-Eingabeleistungsberechnungseinrichtung (26) zum Berechnen der Umrichter-Eingabeleistung basierend auf dem durch die Eingabestromerfassungsschaltung (15) erhaltenen DC-Strom und der durch die Eingabespannungserfassungsschaltung (14) erhaltenen DC-Spannung ist, und
die Leistungsversorgungsspannungsanomalie-Beurteilungseinrichtung (27) dazu ausgelegt ist, basierend auf einer Beziehung zwischen dem Leistungsversorgungsstrom und der Umrichter-Eingabeleistung zu beurteilen, ob eine Leistungsversorgungsspannungsanomalie vorliegt oder nicht.

3. Gerät nach Anspruch 1, ferner mit
einer Phasenstromerfassungsschaltung (33) zum Erfassen eines Phasenstroms der Dreiphasenumrichterschaltung (30),

einer Umrichter-Ausgabespannungsberechnungseinrichtung (42) zum Berechnen einer Ausgabespannung des Dreiphasenumrichters,

wobei

die Umrichter-Eingabe/Ausgabe-Leistungsberechnungseinrichtung (26, 43) eine Umrichter-Ausgabeleistungsberechnungseinrichtung (43) ist, um basierend auf dem durch die Phasenstromerfassungsschaltung (33) erhaltenen Phasenstrom und der durch die Umrichter-Ausgabespannungsberechnungseinrichtung (42) erhaltenen Ausgabespannung die Umrichter-Ausgabeleistung zu berechnen, und

die Leistungsversorgungsspannungsanomalie-Beurteilungseinrichtung (44) dazu ausgelegt ist, basierend auf einer Beziehung zwischen dem Leistungsversorgungsstrom und der Ausgabeleistung des Dreiphasenumrichters zu beurteilen, ob eine Leistungsversorgungsspannungsanomalie vorliegt oder nicht.

4. Gerät nach Anspruch 1, ferner mit

einer Umrichter-Eingabestromerfassungsschaltung (15) zum Erfassen eines DC-Elektrostroms, der durch DC-Eingabeanschlüsse der Dreiphasenumrichterschaltung (3) fließt,

einer Phasenstrom-Rekonstruktionseinrichtung (61) zum Rekonstruieren eines Phasenstroms, der durch eine AC-Last des Dreiphasenumrichters fließt, aus dem durch die Umrichter-Eingabestromerfassungsschaltung (15) erfassten DC-Elektrostrom,

einer Umrichter-Ausgabespannungsberechnungseinrichtung (42) zum Berechnen einer Ausgabespannung des Dreiphasenumrichters,

wobei

die Umrichter-Eingabe/Ausgabe-Leistungsberechnungseinrichtung (26, 43) eine Umrichter-Ausgabeleistungsberechnungseinrichtung (43) ist, um basierend auf dem durch die Phasenstrom-Rekonstruktionseinrichtung (61) erhaltenen Phasenstrom und der durch die Umrichter-Ausgabespannungsberechnungseinrichtung (42) erhaltenen Ausgabespannung die Umrichter-Ausgabeleistung zu berechnen, und

die Leistungsversorgungsspannungsanomalie-Beurteilungseinrichtung (44) dazu ausgelegt ist, basierend auf einer Beziehung zwischen dem Leistungsversorgungsstrom und der Umrichter-Ausgabeleistung zu beurteilen, ob eine Leistungsversorgungsspannungsanomalie vorliegt oder nicht.

5. Gerät nach einem der vorstehenden Ansprüche, wobei die Leistungsversorgungsschaltung (2) und die Dreiphasenumrichterschaltung (3; 30) angehalten werden, wenn die Leistungsversorgungsspannungsanomalie-Beurteilungseinrichtung (27, 44) beurteilt, dass eine Leistungsversorgungsspannungsanomalie vorliegt.

6. Gerät nach einem der vorstehenden Ansprüche, wobei die Leistungsversorgungsspannungsanomalie-Beurteilungseinrichtung (27, 44) eine Einrichtung zum Beurteilen ist, ob ein plötzlicher Leistungsfehler vorliegt oder nicht.

7. Gerät nach einem der Ansprüche 1 bis 5, wobei die Leistungsversorgungsspannungsanomalie-Beurteilungseinrichtung (27, 44) eine Einrichtung zum Beurteilen ist, ob ein plötzlicher Spannungsabfall vorliegt oder nicht.

8. Gerät nach Anspruch 1 oder 2, wobei die Leistungsversorgungsspannungsanomalie-Beurteilungseinrichtung (27, 44) abgeschaltet wird, wenn sowohl der Leistungsversorgungsstrom als auch die Umrichter-Eingabeleistung kleiner als vorbestimmte Werte sind.

9. Gerät nach einem der Anspruche 1, 3 und 4, wobei die Leistungsversorgungsspannungsanomalie-Beurteilungseinrichtung (27, 44) abgeschaltet wird, wenn sowohl der Leistungsversorgungsstrom als auch die Umrichter-Ausgabeleistung kleiner als vorbestimmte Werte sind.

10. Gerät nach einem der vorstehenden Ansprüche, wobei eine AC-Last des Dreiphasenumrichters ein Dreiphasen-AC-Motor (11) ist.

**Revendications**

1. Appareil de protection de circuit d'alimentation électrique d'inverseur triphasé comprenant :

un circuit d'alimentation électrique (2) pour convertir une tension d'entrée CA en une tension de sortie CC ;
un circuit inverseur triphasé (3 ; 30) pour recevoir la tension de sortie CC comme entrée et la convertir en une tension CA triphasée ;

un circuit de détection de courant d'alimentation électrique (13) pour détecter un courant d'alimentation électrique du circuit d'alimentation électrique (2) ;
un moyen de jugement d'anomalie de tension d'alimentation électrique (27, 44) pour juger s'il y a une anomalie de tension d'alimentation électrique ou non ; et
un moyen de commande (25) pour arrêter le circuit inverseur triphasé (3 ; 30) en réponse à une sortie du moyen de jugement d'anomalie de tension d'alimentation électrique (27, 44),
**caractérisé en ce que** :

l'appareil comprend en outre un moyen de calcul de puissance d'entrée/sortie d'inverseur (26, 43) pour calculer une puissance d'entrée ou de sortie ou une valeur équivalente à une puissance d'entrée ou de sortie de l'inverseur triphasé ; et
le moyen de jugement d'anomalie de tension d'alimentation électrique (27, 44) est adapté à juger s'il y a une anomalie de tension d'alimentation électrique ou non sur la base d'une relation entre le courant d'alimentation électrique obtenu par le circuit de détection de courant d'alimentation électrique (13) et la puissance d'entrée ou de sortie ou la valeur équivalente à la puissance d'entrée ou de sortie de l'inverseur triphasé.

2. Appareil selon la revendication 1, comprenant en outre :

un circuit de détection de courant d'entrée (15) pour détecter un courant électrique passant par des bornes d'entrée CC du circuit inverseur triphasé (3) ; et
un circuit de détection de tension d'entrée (14) pour détecter une tension CC entre les bornes d'entrée CC du circuit inverseur triphasé (3) ;
dans lequel :

le moyen de calcul de puissance d'entrée/sortie d'inverseur (26, 43) est un moyen de calcul de puissance d'entrée d'inverseur (26) pour calculer la puissance d'entrée d'inverseur sur la base du courant CC obtenu par le circuit de détection de courant d'entrée (15) et de la tension CC obtenue par le circuit de détection de tension d'entrée (14) ; et
le moyen de jugement d'anomalie de tension d'alimentation électrique (27) est adapté à juger s'il y a une anomalie de tension d'alimentation électrique ou non sur la base d'une relation entre le courant d'alimentation électrique et la puissance d'entrée d'inverseur.

3. Appareil selon la revendication 1, comprenant en outre :

un circuit de détection de courant de phase (33) pour détecter un courant de phase du circuit inverseur triphasé (30) ;
un moyen de calcul de tension de sortie d'inverseur (42) pour calculer une tension de sortie de l'inverseur triphasé ;
dans lequel :

le moyen de calcul de puissance d'entrée/sortie d'inverseur (26, 43) est un moyen de calcul de puissance de sortie d'inverseur (43) pour calculer la puissance de sortie d'inverseur sur la base du courant de phase obtenu par le circuit de détection de courant de phase (33) et de la tension de sortie obtenue par le moyen de calcul de tension de sortie d'inverseur (42) ; et
le moyen de jugement d'anomalie de tension d'alimentation électrique (44) est adapté à juger s'il y a une anomalie de tension d'alimentation électrique ou non sur la base d'une relation entre le courant d'alimentation électrique et la puissance de sortie de l'inverseur triphasé.

4. Appareil selon la revendication 1, comprenant en outre :

un circuit de détection de courant d'entrée d'inverseur (15) pour détecter un courant électrique CC passant par des bornes d'entrée CC du circuit inverseur triphasé (3) ;
un moyen de reconstruction de courant de phase (61) pour reconstruire un courant de phase passant par une charge CA de l'inverseur triphasé à partir du courant électrique CC détecté par le circuit de détection de courant d'entrée d'inverseur (15) ;
un moyen de calcul de tension de sortie d'inverseur (42) pour calculer une tension de sortie de l'inverseur triphasé ;

dans lequel

le moyen de calcul de puissance d'entrée/sortie d'inverseur (26, 43) est un moyen de calcul de puissance de sortie d'inverseur (43) pour calculer la puissance de sortie d'inverseur sur la base du courant de phase obtenu par le moyen de reconstruction de courant de phase (61) et de la tension de sortie obtenue par le moyen de calcul de tension de sortie d'inverseur (42) ; et

le moyen de jugement d'anomalie de tension d'alimentation électrique (44) est adapté à juger s'il y a une anomalie de tension d'alimentation électrique ou non sur la base d'une relation entre le courant d'alimentation électrique et la puissance de sortie d'inverseur.

5. Appareil selon une quelconque revendication précédente, dans lequel le circuit d'alimentation électrique (2) et le circuit inverseur triphasé (3 ; 30) sont arrêtés lorsque le moyen de jugement d'anomalie de tension d'alimentation électrique (27, 44) juge qu'il y a une anomalie de tension d'alimentation électrique.

6. Appareil selon une quelconque revendication précédente, dans lequel le moyen de jugement d'anomalie de tension d'alimentation électrique (27, 44) est un moyen pour juger s'il y a une défaillance d'alimentation électrique instantanée ou non.

7. Appareil selon l'une quelconque des revendications 1 à 5, dans lequel le moyen de jugement d'anomalie de tension d'alimentation électrique (27, 44) est un moyen pour juger s'il y a une chute de tension instantanée ou non.

8. Appareil selon la revendication 1 ou 2, dans lequel le moyen de jugement d'anomalie de tension d'alimentation électrique (27, 44) est désactivé lorsque le courant d'alimentation électrique et la puissance d'entrée d'inverseur sont tous les deux plus petits que des valeurs prédéterminées.

9. Appareil selon l'une quelconque des revendications 1, 3 et 4, dans lequel le moyen de jugement d'anomalie de tension d'alimentation électrique (27, 44) est désactivé lorsque le courant d'alimentation électrique et la puissance de sortie d'inverseur sont tous les deux plus petits que des valeurs prédéterminées.

10. Appareil selon une quelconque revendication précédente, dans lequel une charge CA de l'inverseur triphasé est un moteur CA triphasé (11).

# FIG. 1

# FIG. 2

# FIG. 3

```
┌─────────────────────────────────┐
│ POWER SUPPLY VOLTAGE ANOMALY     │
│ PROTECTION JUDGMENT PROCESS      │
└─────────────────────────────────┘
                │
                ▼
┌─────────────────────────────────┐
│ READ POWER SUPPLY CURRENT VALUE  │ ~301
│ AND INVERTER INPUT POWER         │
└─────────────────────────────────┘
                │
                ▼
┌─────────────────────────────────┐
│ CALCULATE INSTANTANEOUS POWER    │
│ FAILURE PROTECTION JUDGMENT VALUE│ ~302
│ AND INSTANTANEOUS VOLTAGE DROP   │
│ PROTECTION JUDGMENT VALUE FOR    │
│ POWER SUPPLY CURRENT BASED ON    │
│ INVERTER INPUT POWER VALUE       │
└─────────────────────────────────┘
                │
                ▼
        ┌──────────────────────┐  ~303
       ╱ IS POWER SUPPLY CURRENT ╲
      ╱  GREATER THAN OR EQUAL TO  ╲
      ╲  INSTANTANEOUS POWER FAILURE╱  NO
       ╲ PROTECTION JUDGMENT VALUE ?╱
        └──────────────────────┘
                │ YES
                ▼
        ┌──────────────────────┐  ~304
       ╱ IS POWER SUPPLY CURRENT ╲
      ╱  GREATER THAN OR EQUAL TO  ╲
      ╲  INSTANTANEOUS VOLTAGE DROP ╱  NO
       ╲ PROTECTION JUDGMENT VALUE ?╱
        └──────────────────────┘
                │ YES
```

305

POWER SUPPLY VOLTAGE
ANOMALY PROTECTION PROCESS
(HALT CONTROL OF INVERTER
AND CONVERTER)

RETURN

# FIG. 4

# FIG. 5

```
┌─────────────────────────────────────┐
│  POWER SUPPLY VOLTAGE ANOMALY         │
│  PROTECTION JUDGMENT PROCESS          │
└─────────────────────────────────────┘
                  │
                  ▼
┌─────────────────────────────────────┐
│     READ POWER SUPPLY CURRENT         │──── 501
│     AND INVERTER INPUT POWER          │
└─────────────────────────────────────┘
                  │
                  ▼
        ┌─────────────────────┐
  YES   │ ARE POWER SUPPLY CURRENT AND    │──── 502
◄───────│ INVERTER INPUT POWER WITHIN     │
        │ POWER SUPPLY VOLTAGE ANOMALY    │
        │ NON-JUDGMENT REGION ?           │
        └─────────────────────┘
                  │ NO
                  ▼
┌─────────────────────────────────────┐
│  CALCULATE INSTANTANEOUS POWER        │
│  FAILURE PROTECTION JUDGMENT VALUE    │──── 503
│  AND INSTANTANEOUS VOLTAGE DROP       │
│  PROTECTION JUDGMENT VALUE FOR        │
│  POWER SUPPLY CURRENT BASED ON        │
│  INVERTER INPUT POWER VALUE           │
└─────────────────────────────────────┘
                  │
                  ▼
        ┌─────────────────────┐
        │ IS POWER SUPPLY CURRENT         │──── 504
        │ GREATER THAN OR EQUAL TO        │
        │ INSTANTANEOUS POWER FAILURE     │   NO
        │ PROTECTION JUDGMENT VALUE ?     │────────┐
        └─────────────────────┘                   │
                  │ YES                            │
                  ▼                                │
        ┌─────────────────────┐                   │
        │ IS POWER SUPPLY CURRENT         │─ 505   │
        │ GREATER THAN OR EQUAL TO        │        │
        │ INSTANTANEOUS VOLTAGE DROP      │   NO   │
        │ PROTECTION JUDGMENT VALUE ?     │────────┤
        └─────────────────────┘                   │
                  │ YES                            ▼
                  │                  ┌──────────────────────────┐
                  │                  │   POWER SUPPLY VOLTAGE     │──── 506
                  │                  │ ANOMALY PROTECTION PROCESS │
                  │                  │ (HALT CONTROL OF INVERTER  │
                  │                  │   AND CONVERTER)           │
                  │                  └──────────────────────────┘
                  │                                │
                  └──────────────┬────────────────┘
                                 ▼
                        ┌─────────────────┐
                        │     RETURN       │
                        └─────────────────┘
```

## FIG. 6

# FIG. 7

# FIG. 8

# FIG. 9

```
┌─────────────────────────────────┐
│   POWER SUPPLY VOLTAGE ANOMALY   │
│   PROTECTION JUDGMENT PROCESS    │
└─────────────────────────────────┘
                 │
                 ▼
┌─────────────────────────────────┐
│   READ POWER SUPPLY CURRENT VALUE │──── 901
│   AND INVERTER OUTPUT POWER      │
└─────────────────────────────────┘
                 │
                 ▼
┌─────────────────────────────────┐
│  CALCULATE INSTANTANEOUS POWER   │
│  FAILURE PROTECTION JUDGMENT VALUE│
│  AND INSTANTANEOUS VOLTAGE DROP  │──── 902
│  PROTECTION JUDGMENT VALUE FOR   │
│  POWER SUPPLY CURRENT BASED ON   │
│  INVERTER OUTPUT POWER VALUE     │
└─────────────────────────────────┘
                 │
                 ▼
        ╱─────────────────────╲
       ╱  IS POWER SUPPLY       ╲──── 903
      ╱   CURRENT GREATER THAN    ╲
      ╲   OR EQUAL TO             ╱      NO
       ╲  INSTANTANEOUS POWER    ╱
        ╲ FAILURE PROTECTION    ╱
         ╲JUDGMENT VALUE ?     ╱
          ╲─────────────────╱
               YES │
                   ▼
        ╱─────────────────────╲
       ╱  IS POWER SUPPLY       ╲──── 904
      ╱   CURRENT GREATER THAN    ╲
      ╲   OR EQUAL TO             ╱      NO
       ╲  INSTANTANEOUS VOLTAGE  ╱
        ╲ DROP PROTECTION       ╱
         ╲JUDGMENT VALUE ?     ╱
          ╲─────────────────╱
               YES │                     905
                   │          ┌────────────────────────┐
                   │          │  POWER SUPPLY VOLTAGE   │
                   │          │  ANOMALY PROTECTION     │
                   │          │  PROCESS                │
                   │          │  (HALT CONTROL OF       │
                   │          │  INVERTER AND CONVERTER)│
                   │          └────────────────────────┘
                   ▼
        ┌─────────────────┐
        │     RETURN      │
        └─────────────────┘
```

# FIG. 10

**EP 2 381 573 B1**

**Patent documents cited in the description**

- JP 2006109583 A
- EP 1811645 A1
- DE 102004025176 A1
- US 4678980 A
- US 4620296 A